# EUROPEAN PATENT APPLICATION

(11) **EP 4 752 709 A1**
(43) Date of publication of application: **03.06.2026**
(21) Application number: 25217323.2
(22) Date of filing: 20.11.2025
(51) Int. Cl.: G06F 8/65

(54) **IMAGE PROCESSING APPARATUS**

(30) Priority: 28.11.2024 JP 2024207430
(71) Applicant: KYOCERA Document Solutions Inc., Osaka-shi, Osaka 540-8585 (JP)
(72) Inventor: Nakagawa, Ryo, Osaka-shi, 540-8585 (JP)
(74) Representative: Plougmann Vingtoft a/s

(57) **Abstract**

A second processor (5a) is capable of communicating with a first processor (6a) and an external apparatus and executes a download to receive a plurality of pieces of candidate firmware and a plurality of pieces of identification data from the external apparatus. When the download is executed, the second processor (5a) transmits the plurality of respective pieces of identification data. The first processor (6a) transmits a plurality of respective responses indicating whether or not the plurality of respective pieces of identification data are targets for updating pieces of implemented firmware. In a case where the plurality of responses includes positive responses indicating the targets, the second processor (5a) transmits pieces of target firmware corresponding to the positive responses among the plurality of pieces of candidate firmware. The first processor (6a) updates firmware corresponding to the target firmware to the target firmware.

## Description

### INCORPORATION BY REFERENCE

This application is based upon and claims the benefit of priority from the corresponding Japanese Patent Application No. 2024-207430 filed on November 28, 2024, the entire contents of which are incorporated herein by reference.

### BACKGROUND

This disclosure relates to an image processing apparatus that allows firmware to be updated.

An image processing apparatus such as a printer, a copying machine, or a multifunction peripheral includes one or more processors that execute control or data processing related to image processing.

The processors execute various pieces of software. The pieces of software include layered firmware, basic software, applied software, and the like.

In the image processing apparatus, the firmware is upgraded in some cases.

For example, it has been known that a host apparatus capable of communicating with a printer relays the provision of firmware for the printer from a server. In this case, the host apparatus compares the version information about firmware stored in a storage device of the printer and the version of the firmware provided from the server and provides the firmware of the new version to the printer.

### SUMMARY

An image processing apparatus according to an aspect of this disclosure includes a non-volatile storage device, a first processor, and a second processor. The first processor executes control or data processing related to image processing by executing one or more pieces of implemented firmware stored in the non-volatile storage device. The second processor is capable of communicating with the first processor and an external apparatus. The second processor executes a download to receive a plurality of pieces of candidate firmware and a plurality of pieces of identification data from the external apparatus when receiving a download request from the external apparatus. The plurality of pieces of identification data is for identifying types and versions of the plurality of respective pieces of candidate firmware. When the download is executed, the second processor transmits the plurality of respective pieces of identification data to the first processor. The first processor receives the plurality of respective pieces of identification data and transmits a plurality of respective responses to the second processor. The plurality of responses indicates whether or not the plurality of respective pieces of identification data are targets for updating the pieces of implemented firmware. The second processor receives the plurality of respective responses from the first processor. In a case where the plurality of responses includes one or more positive responses indicating the targets, the second processor further transmits, to the first processor, one or more pieces of target firmware corresponding to the positive responses among the plurality of pieces of candidate firmware. The first processor receives the pieces of target firmware from the second processor and updates firmware corresponding to the target firmware among the pieces of implemented firmware to the target firmware.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a block diagram showing a configuration of an image processing apparatus according to an embodiment.
FIG. 2 is a flowchart showing an example of a procedure of a firmware upgrade process in the image processing apparatus according to the embodiment.
FIG. 3 is a configuration diagram of firmware list data.

### DETAILED DESCRIPTION

Hereinafter, an embodiment of this disclosure will be described with reference to the drawings. It is noted that the following embodiment is a specific example of this disclosure and does not limit the technical scope of this disclosure.

An image processing apparatus 10 according to the embodiment is capable of executing various kinds of image processing such as an image reading process and an image formation process. For example, the image processing apparatus 10 is a copying machine, a facsimile apparatus, a multifunction peripheral, or the like.

### [Configuration of Image Processing Apparatus 10]

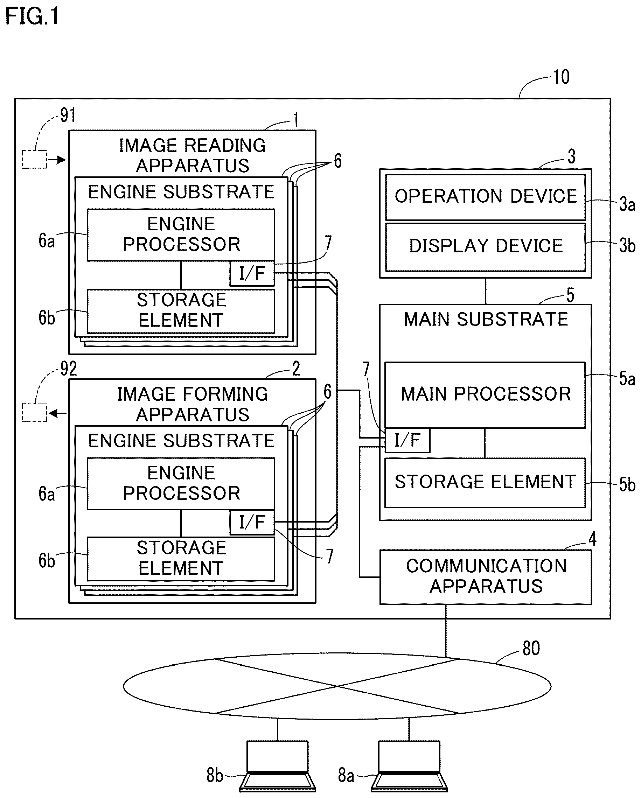

In the example shown in FIG. 1, the image processing apparatus 10 includes an image reading apparatus 1, an image forming apparatus 2, a user interface apparatus 3, a communication apparatus 4, a main substrate 5, and the like.

The image processing apparatus 10 is capable of communicating with an external apparatus such as a host apparatus 8a or a server 8b on the Internet through a network 80. The network 80 includes a local area network (LAN), the Internet, and the like. The host apparatus 8a and the server 8b are computers each capable of communicating with the image processing apparatus 10.

The image reading apparatus 1 executes the image reading process. The image reading process is a process of reading an image from a document sheet 91 and outputting the data of the read image. The read image is an image read by the image reading apparatus 1 from the document sheet 91.

The image forming apparatus 2 executes an image formation process of forming an image on a sheet 92. The image forming apparatus 2 includes a sheet conveying mechanism that conveys the sheet 92 and a printing device that forms an image on the conveyed sheet 92. The printing device forms an image on the sheet 92 in a predefined method such as an electrographic method or an inkjet method.

The user interface apparatus 3 includes an operation device 3a and a display device 3b. The operation device 3a is a device that receives a human operation. For example, the operation device 3a includes an operation button, a touch panel, and the like. The display device 3b is capable of displaying information. For example, the display device 3b includes a display panel such as a liquid-crystal panel.

The communication apparatus 4 is a communication interface device that communicates with the external apparatus such as the host apparatus 8a or the server 8b through the network 80.

The image forming apparatus 2 executes the image formation process based on the data of the read image or received print data. The received print data is data included in a print request received from the host apparatus 8a through the communication apparatus 4.

The main substrate 5 is a substrate in which a main processor 5a is implemented. In the example shown in FIG. 1, a storage element 5b that allows the main processor 5a to have access thereto is also implemented in the main substrate 5.

The main processor 5a executes software stored in the storage element 5b, thereby executing various operations, data processing, and control over the various electrical apparatuses included in the image processing apparatus 10.

The storage element 5b is, for example, a non-volatile storage device such as a flash memory or an electrically erasable programmable read-only memory (EEPROM). It is noted that a solid state drive (SSD) or the like which is not implemented in the main substrate 5 may be adopted instead of the storage element 5b.

The image reading apparatus 1 and the image forming apparatus 2 each include a plurality of engine substrates 6. In each of the engine substrates 6, an engine processor 6a and a storage element 6b that allows the engine processor 6a to have access thereto are implemented.

The storage element 6b is, for example, a non-volatile storage device such as a flash memory or an EEPROM. It is noted that an SSD or the like which is not implemented in each of the engine substrates 6 may be adopted instead of the storage element 6b.

The engine processor 6a of each of the engine substrates 6 executes software stored in the storage element 6b. The engine processor 6a hereby executes control or data processing related to image processing.

The engine processor 6a is an example of a first processor. Each of the engine substrates 6 is an example of a first substrate in which the first processor is implemented.

For example, the engine processor 6a controls a motor, a heater, or an electronic device included in the image reading apparatus 1 or the image forming apparatus 2.

The storage element 6b of each of the engine substrates 6 is a storage device that allows data to be rewritten. The storage element 6b is, for example, a non-volatile storage device such as a flash memory or an electrically erasable programmable read-only memory (EEPROM).

The main substrate 5 and the engine substrates 6 each include an apparatus communication interface 7. The apparatus communication interface 7 is an interface of apparatus communication executed between the main processor 5a and the engine processor 6a. The apparatus communication is, for example, serial communication.

That is, the main processor 5a is capable of communicating with the engine processor 6a through the apparatus communication interface 7. The main processor 5a is an example of a second processor capable of communicating with the engine processor 6a and the external apparatus. The main substrate 5 is an example of a second substrate in which the second processor is implemented.

The engine processor 6a executes various pieces of software stored in the storage element 6b. The pieces of software include layered firmware, basic software, applied software, and the like.

The following description refers to one or more pieces of firmware stored in the storage element 6b of each of the engine substrates 6 as pieces of implemented firmware. In this embodiment, the plurality of pieces of implemented firmware is stored in the storage element 6b of the engine substrate 6.

In the image processing apparatus 10, some or all of the plurality of pieces of implemented firmware in each of the engine substrates 6 are upgraded in some cases.

Incidentally, the main role of the engine processor 6a in which software including the plurality of pieces of implemented firmware is implemented is to perform control or data processing related to image processing. It is not therefore preferable to request a complicated process from the engine processor 6a to upgrade some or all of the plurality of pieces of implemented firmware.

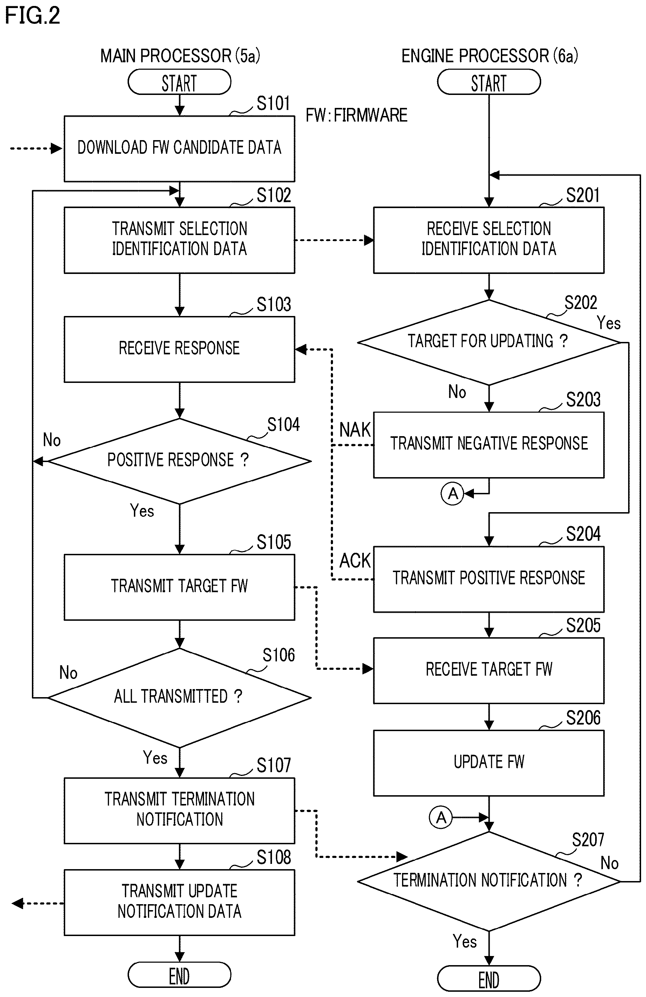

In the image processing apparatus 10, the main processor 5a and each of the engine processors 6a execute a firmware upgrade process (see FIG. 2). This allows the engine processor 6a to appropriately upgrade some or all of the plurality of pieces of implemented firmware through a simple process.

### [Firmware Upgrade Process]

Hereinafter, examples of procedures of the firmware upgrade process will be described with reference to the flowchart shown in FIG. 2.

In the following description, S101, S102, ... represent the reference signs of a plurality of steps to be executed by the main processor 5a in the firmware upgrade process. In addition, S201, S202, ... represent the reference signs of a plurality of steps to be executed by each of the engine processors 6a in the firmware upgrade process.

When receiving a download request from the host apparatus 8a or the server 8b through the communication apparatus 4, the main processor 5a starts the firmware upgrade process.

In this embodiment, the download request includes designation information for designating a target engine substrate that is a target of the firmware upgrade process among the plurality of engine substrates 6.

The main processor 5a selects the target engine substrate from the plurality of engine substrates 6 in accordance with the designation information. In the firmware upgrade process, the main processor 5a executes communication with the engine processor 6a of the target engine substrate through the apparatus communication interface 7.

First, the main processor 5a executes the process of step S101 in response to the download request. The following description refers to the host apparatus 8a or the server 8b that transmits the download request as firmware providing apparatus.

### <Step S101>

In step S101, the main processor 5a executes a download to receive firmware candidate data from the firmware providing apparatus when receiving the download request from the firmware providing apparatus.

The firmware candidate data includes a plurality of pieces of candidate firmware and firmware list data D1. The plurality of pieces of candidate firmware are candidates for upgrading some or all of the plurality of pieces of implemented firmware.

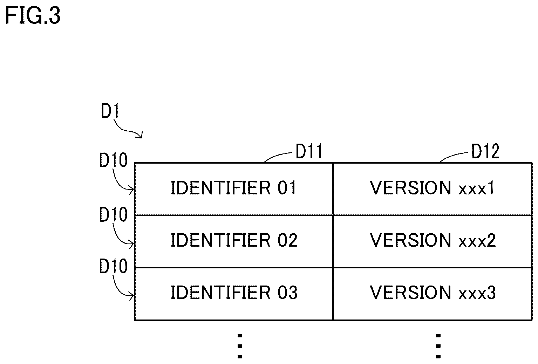

The firmware list data D1 includes a plurality of pieces of identification data D10 for identifying the types and the versions of the plurality of respective pieces of candidate firmware (see FIG. 3).

Each of the pieces of identification data D10 includes identifier data D11 and version data D12 (see FIG. 3). The identifier data D11 is for identifying the type of each of the plurality of pieces of candidate firmware. The version data D12 is for identifying the version of each of the plurality of pieces of candidate firmware.

The version data D12 is, for example, data such as year/month/day or a serial number that makes it possible to make a comparison as to which version is newer or older.

The main processor 5a executes the process of step S102 after executing the process of step S101.

### <Step S102>

In step S102, the main processor 5a selects one piece of selection identification data from the plurality of pieces of identification data D10 and transmits the selection identification data to the engine processor 6a.

The process of step S102 is executed to cause the engine processor 6a to execute the process of step S201. The main processor 5a executes the process of step S103 after executing the process of step S102.

### <Step S201>

The engine processor 6a receives the selection identification data from the main processor 5a in step S201 and further executes the process of step S202.

### <Step S202>

In step S202, the engine processor 6a determines whether or not the selection identification data is a target for updating any of the plurality of pieces of implemented firmware.

In step S202, the engine processor 6a sequentially selects pieces of reference firmware from the plurality of pieces of implemented firmware.

Furthermore, the engine processor 6a determines that the selection identification data is a target for updating the implemented firmware in a case where an update target condition is satisfied.

The update target condition is a condition that any of the plurality of pieces of implemented firmware has the type indicated by the identifier data D11 of the selection identification data and a version older than the version indicated by the version data D12 of the selection identification data.

In contrast, the engine processor 6a determines that the selection identification data is not a target for updating the implemented firmware in a case where the update target condition is not satisfied.

In a case where it is determined that the selection identification data is not a target for updating the implemented firmware, the engine processor 6a executes the process of step S203. In contrast, in a case where it is determined that the selection identification data is a target for updating the implemented firmware, the engine processor 6a executes the process of step S204.

### <Step S203>

In step S203, the engine processor 6a transmits a negative response NAK to the main processor 5a. The negative response NAK is a response indicating that the selection identification data is not a target for updating the implemented firmware.

The engine processor 6a executes the process of step S207 after executing the process of step S203.

### <Step S204>

In step S204, the engine processor 6a transmits a positive response ACK to the main processor 5a. The positive response ACK is a response indicating that the selection identification data is a target for updating the implemented firmware.

The engine processor 6a executes the process of step S205 after executing the process of step S204.

The process of step S203 or step S204 is executed to cause the main processor 5a to execute the process of step S103.

### <Step S103>

The main processor 5a receives the response from the engine processor 6a in step S103 and executes the process of step S104.

### <Step S104>

In step S104, the main processor 5a selects a next process depending on whether the response is a negative response NAK or a positive response ACK.

In a case where the response is a negative response NAK, the main processor 5a executes the processes of step S102 and the subsequent steps. In this case, the main processor 5a newly selects selection identification data from the plurality of pieces of identification data D10 and executes the processes of step S102 and the subsequent steps for the new selection identification data.

In contrast, in a case where the response is a positive response ACK, the main processor 5a executes the process of step S105.

### <Step S105>

In step S105, the main processor 5a transmits, to the engine processor 6a, the target firmware corresponding to the positive response ACK among the plurality of pieces of candidate firmware.

The process of step S105 is executed to cause the engine processor 6a to execute the process of step S205. The main processor 5a executes the process of step S106 after executing the process of step S105.

### <Step S205>

The engine processor 6a receives the target firmware from the main processor 5a in step S205 and further executes the process of step S206.

### <Step S206>

In step S206, the engine processor 6a updates the one piece of firmware corresponding to the target firmware among the plurality of pieces of implemented firmware stored in the storage element 6b to the target firmware.

The engine processor 6a executes the process of step S207 after executing the process of step S206.

### <Step S106>

In step S106, the main processor 5a selects a next process depending on whether or not the plurality of pieces of identification data D10 is all transmitted as the pieces of selection identification data.

In a case where some of the plurality of pieces of identification data D10 have not yet been transmitted as the pieces of selection identification data, the main processor 5a executes the processes of step S102 and the subsequent steps. In this case, the main processor 5a newly selects selection identification data from the plurality of pieces of identification data D10 and executes the processes of step S102 and the subsequent steps for the new selection identification data.

In contrast, in a case where the plurality of pieces of identification data D10 is all transmitted as the pieces of selection identification data, the main processor 5a executes the process of step S107.

### <Step S107>

In step S107, the main processor 5a transmits a termination notification to the engine processor 6a.

The process of step S107 is executed to cause the engine processor 6a to execute the process of step S207. The main processor 5a executes the process of step S108 after executing the process of step S107.

### <Step S207>

In step S207, the engine processor 6a selects a next process depending on whether or not the termination notification is received from the main processor 5a within a fixed time.

In a case where the termination notification is not received within the fixed time, the engine processor 6a executes the processes of step S201 and the subsequent processes. In contrast, in a case where the termination notification is received within the fixed time, the engine processor 6a terminates the processes by the engine processor 6a in the firmware upgrade process.

### <Step S108>

Meanwhile, in step S108, the main processor 5a transmits update notification data to the firmware providing apparatus.

The update notification data includes one or more pieces of target identification data corresponding to positive responses ACK among the pieces of identification data D10. This allows the firmware providing apparatus to grasp the types and the versions of the one or more pieces of upgraded firmware among the plurality of pieces of implemented firmware in the engine processor 6a of the target engine substrate.

The main processor 5a terminates the firmware upgrade process after executing the process of step S108.

As described above, when receiving the download request from the firmware providing apparatus, the main processor 5a executes the download (see step S101). As described above, the download is a process of receiving the plurality of pieces of candidate firmware and the plurality of pieces of identification data D10 from the firmware providing apparatus.

Furthermore, when the download is executed, the main processor 5a sequentially transmits the plurality of respective pieces of identification data D10 to the engine processor 6a (see step S102).

Meanwhile, the engine processor 6a receives the plurality of respective pieces of identification data D10 from the main processor 5a and transmits the plurality of respective responses to the main processor 5a (see steps S201 to S204).

The plurality of respective responses indicates whether or not the plurality of pieces of identification data D10 are targets for updating any of the plurality of pieces of implemented firmware.

The main processor 5a receives the plurality of respective responses from the engine processor 6a (see step S103). Furthermore, in a case where the plurality of responses includes one or more positive responses ACK, the main processor 5a transmits, to the engine processor 6a, the one or more pieces of target firmware corresponding to the positive responses ACK among the plurality of pieces of candidate firmware (see step S105).

Meanwhile, the engine processor 6a receives the pieces of target firmware from the main processor 5a (see step S205). Furthermore, the engine processor 6a updates firmware corresponding to the target firmware among the plurality of pieces of implemented firmware to the target firmware (see step S206).

The image processing apparatus 10 is adopted, thereby making it possible to appropriately upgrade the implemented firmware through a simple process by the engine processor 6a.

In addition, in this embodiment, the pieces of information about the types and the versions of the plurality of pieces of implemented firmware in each of the engine processors 6a do not have to be registered in the main processor 5a or the firmware providing apparatus in advance.

Thus, even in a case where only one of each of the engine substrates 6 and the main substrate 5 is replaced with a substrate of a new version, the failure in upgrading the implemented firmware caused by the pieces of inconsistent information about the respective substrates is avoided.

It is noted that the server 8b may execute a process as the firmware providing apparatus, the host apparatus 8a may execute a process as the main processor 5a, and the main processor 5a may execute a process as the engine processor 6a in the firmware upgrade process.

In addition, a maintenance-dedicated apparatus including the apparatus communication interface 7 may be connected to the main substrate 5. In this case, the maintenance-dedicated apparatus may execute a process as the firmware providing apparatus in the firmware upgrade process.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An image processing apparatus (10) comprising:
a non-volatile storage device (6b);
a first processor (6a) configured to execute control or data processing related to image processing by executing one or more pieces of implemented firmware stored in the non-volatile storage device (6b); and
a second processor (5a) capable of communicating with the first processor (6a) and an external apparatus, wherein
the second processor (5a) executes a download to receive a plurality of pieces of candidate firmware and a plurality of pieces of identification data from the external apparatus when receiving a download request from the external apparatus, the plurality of pieces of identification data being for identifying types and versions of the plurality of respective pieces of candidate firmware,
when the download is executed, the second processor (5a) transmits the plurality of respective pieces of identification data to the first processor (6a),
the first processor (6a) receives the plurality of respective pieces of identification data and transmits a plurality of respective responses to the second processor (5a), the plurality of responses indicating whether or not the plurality of respective pieces of identification data are targets for updating the pieces of implemented firmware,
the second processor (5a) receives the plurality of respective responses from the first processor (6a),
in a case where the plurality of responses includes one or more positive responses indicating the targets, the second processor (5a) further transmits, to the first processor (6a), one or more pieces of target firmware corresponding to the positive responses among the plurality of pieces of candidate firmware, and
the first processor (6a) receives the pieces of target firmware from the second processor (5a) and updates firmware corresponding to the target firmware among the pieces of implemented firmware to the target firmware.

2. The image processing apparatus (10) according to claim 1, comprising:
a first substrate (6) in which the first processor (6a) is implemented; and
a second substrate (5) in which the second processor (5a) is implemented.

3. The image processing apparatus (10) according to claim 1 or 2, wherein the second processor (5a) transmits update notification data to the external apparatus, the update notification data including one or more pieces of target identification data corresponding to the positive responses among the plurality of pieces of identification data.
